# DEMANDE DE BREVET EUROPEEN

(11) **EP 2 111 034 A1**
(43) Date de publication de la demande: **21.10.2009**
(21) Numéro de dépôt: 09156393.2
(22) Date de dépôt: 27.03.2009
(51) Int. Cl.: H04N 5/00

(54) **Dispositif de contrôle du transfert de la réception d'un contenu en cours de diffusion entre deux équipements voisins**

(30) Priorité: 14.04.2008 FR 0852483
(71) Demandeur: Alcatel Lucent, 75008 Paris (FR)
(72) Inventeur: Fournigault, Lionel, 91620, NOZAY (FR); Saidi, Mohamed Adel, 91620, NOZAY (FR); Poussiere, Fabrice, 91620, NOZAY (FR)
(74) Mandataire: Ameline, Jean-Paul B.C.

(57) **Abrégé**

Un dispositif de contrôle (D) est dédié à un équipement (T, ER) capable de recevoir des contenus et des informations relatives à ces contenus qui sont diffusés par un réseau de diffusion non filaire (RD). Ce dispositif (D) comprend des moyens de traitement (MT) chargés, en cas de récupération par des moyens de communication radio à courte portée (MC1) auxquels leur équipement (T, ER) est associé, auprès d'autres moyens de communication radio à courte portée (MC1) auxquels est associé un autre équipement (ER, T) voisin, d'informations relatives au contenu diffusé que ce dernier reçoit, de configurer son équipement (T, ER) en fonction de ces informations récupérées afin qu'il reçoive le contenu correspondant qui est en cours de diffusion.

## Description

L'invention concerne le domaine de la réception par des équipements non filaires de contenus diffusés par des réseaux de diffusion de contenus non filaires.

On entend ici par « contenu » un ensemble de données d'un même type, comme par exemple des programmes de télévision (vidéo) ou de radio (audio) ou des vidéos.

Par ailleurs, on entend ici par « réseau de diffusion de contenus » tout type d'infrastructure terrestre et/ou satellitaire, non filaire, capable de transmettre par voie des d'ondes, en mode « broadcast » (diffusion) et/ou « multicast » (point-à-multipoints), des contenus, éventuellement multimédia, selon une voie descendante (ou aller) à destination d'équipements radio (non filaires). Par conséquent, il pourra par exemple s'agir d'un réseau de type DVB (pour « Digital Video Broadcasting ») ou DAB (pour « Digital Audio Broadcasting »).

Enfin, on entend ici par « équipement radio » tout équipement électronique, mobile (ou cellulaire) ou portable, capable au moins de recevoir des contenus d'un réseau de diffusion de contenus non filaire. Par conséquent, il pourra par exemple s'agir d'un téléphone mobile (ou cellulaire), d'un ordinateur portable, d'un assistant personnel numérique (ou PDA), ou d'un récepteur de contenus embarqué (par exemple un autoradio de véhicule automobile), dès lors qu'il est au moins équipé de moyens de réception de contenus.

De nombreux équipements non filaires (mobiles ou portables) permettent de recevoir des contenus, éventuellement multimédia. Cela permet à leurs usagers d'écouter et/ou regarder un programme audio ou vidéo qui est en cours de diffusion par réseau de diffusion, alors même qu'ils se déplacent à pied ou au moyen d'un véhicule (éventuellement automobile). Cependant, lorsqu'un usager se sert d'un premier équipement, comme par exemple l'autoradio de son véhicule automobile, pour recevoir un contenu diffusé par une chaîne de télévision ou une station radiophonique, et qu'il doit se séparer de ce premier équipement (par exemple du fait qu'il quitte son véhicule), il doit, s'il désire continuer à recevoir ce contenu diffusé, prendre un second équipement non filaire (également capable de recevoir les contenus diffusés), puis caler manuellement ce second équipement sur la chaîne ou la station qui le diffuse, L'usager est donc non seulement obligé d'effectuer plusieurs opérations, mais également privé de contenu pendant un certain temps.

L'invention a donc pour but de remédier à cet inconvénient.

Elle propose à cet effet un dispositif de contrôle pour un équipement propre à recevoir des contenus et des informations relatives à ces contenus diffusés par un réseau de diffusion non filaire.

Ce dispositif de contrôle comprend des moyens de traitement chargés, lorsque des moyens de communication radio à courte portée auxquels leur équipement est associé a récupéré auprès de moyens de communication radio à courte portée auxquels est associé un autre équipement voisin des informations relatives au contenu diffusé que ce dernier reçoit, de configurer leur équipement en fonction de ces informations récupérées de sorte qu'il reçoive le contenu correspondant en cours de diffusion.

Le dispositif de contrôle selon l'invention peut comporter d'autres caractéristiques qui peuvent être prises séparément ou en combinaison, et notamment :
- ses moyens de traitement peuvent être chargés d'ordonner aux moyens de communication radio à courte portée associés à leur équipement de récupérer auprès des moyens de communication radio à courte portée associés à un autre équipement voisin des informations relatives su contenu diffusé qu'il reçoit ;
- les contenus peuvent être choisis parmi (au moins) des programmes audio et des programmes vidéo ;
- ses moyens de traitement peuvent être chargés, lorsque l'équipement est un équipement de communication disposant de moyens de communication radio à courte portée, de moyens de réception de contenus non fibres (propres à recevoir des contenus et des informations relatives aux contenus diffusés par le réseau de diffusion non filaire) et de moyens de communication non filaires (propres à se connecter à un réseau de communication non filaire), de déterminer si les moyens de réception de contenus de leur équipement sont en mesure de recevoir le contenu correspondant aux informations récupérées, et i) dans l'affirmative, de configurer leur équipement afin qu'il utilise le contenu qui est diffusé via le réseau de diffusion non filaire et qui est reçu par ses moyens de réception de contenus non filaires, et ii) dans la négative, d'ordonner aux moyens de communication non filaires de leur équipement de se connecter au réseau de communication non flaire afin de recevoir le contenu en cours de diffusion ;
- en variante, ses moyens de traitement peuvent être chargés, lorsque l'équipement dispose de moyens de réception de contenus non filaires (propres à recevoir des contenus et des informations relatives aux contenus diffusés par le réseau de diffusion non filaire) et est associé à des moyens de communication radio à courte portée, d'ordonner aux moyens de réception de contenus non filaires de leur équipement de recevoir ce contenu en cours de diffusion via le réseau de diffusion non filaire.

L'invention propose également un équipement de communication non filaire comprenant i) des moyens de communication non filaires (propres à se connecter à un réseau de communication non filaire), ii) des moyens de communication radio à courte portée (propres à échanger des messages avec des moyens de communication radio à courte portée associés à un autre équipement voisin), et iii) un dispositif de contrôle du type de celui présenté ci-avant.

Cet équipement de communication non filaire peut également comprendre des moyens de réception de contenus non filaires propres à recevoir des contenus et des informations relatives aux contenus diffusés par un réseau de diffusion non filaire.

L'invention propose également un équipement de réception de contenus non filaire comprenant i) des moyens de réception de contenus non filaires (propres à recevoir des contenus et des informations relatives aux contenus diffusés par un réseau de diffusion non filaire), et ii) un dispositif de contrôle du type de celui présenté ci-avant.

Cet équipement de réception de contenus non filaire peut également comprendre des moyens de communication radio à courte portée propres à échanger des messages avec des moyens de communication radio à courte portée associés à un autre équipement (ER, T) voisin.

On notera que l'équipement de communication non filaire et/ou l'équipement de réception de contenus non filaire peu(ven)t comprendre des moyens de communication radio à courte portée qui sont propres à échanger des messages selon un standard de communication choisi parmi (au moins) Bluetooth et Wi-Fi.

D'autres caractéristiques et avantages de l'invention apparaîtront à l'examen de la description détaillée ci-après, et des dessins annexés, sur lesquels :
- la figure 1 illustre de façon très schématique et fonctionnelle un réseau de diffusion de contenus non filaire connecté à un réseau de communication non filaire, ainsi qu'un premier exemple d'équipement de réception de contenus non filaire et un équipement de communication non filaire équipés tous les deux d'un exemple de réalisation d'un dispositif de contrôle selon l'invention,
- la figure 2 illustre de façon très schématique et fonctionnelle un deuxième exemple d'équipement de réception de contenus non filaire équipé d'un exemple de réalisation d'un dispositif de contrôle selon l'invention, et
- la figure 3 illustre de façon très schématique et fonctionnelle un troisième exemple d'équipement de réception de contenus non filaire couplé à un exemple de réalisation d'un dispositif de contrôle selon l'invention.

Les dessins annexés pourront non seulement servir à compléter l'invention; mais aussi contribuer à sa définition, le cas échéant.

L'invention a pour objet de permettre à un usager qui reçoit avec un premier équipement non filaire un contenu diffusé par une chaîne de télévision ou une station radiophonique via un réseau de diffusion, de continuer, lorsqu'il le désire (par exemple en lançant une application), à recevoir ce contenu diffusé avec un second équipement non filaire sans avoir à caler manuellement ce dernier sur la chaîne ou la station qui le diffuse.

Dans ce qui suit, on considère à titre d'exemple non limitatif que les contenus diffusés sont des programmes radiophoniques (audio) délivrés par des stations de radio. Mais, l'invention n'est pas limitée à ce type de contenu. Elle, concerne en effet tout type de contenu, éventuellement multimédia, et notamment les vidéos et les programmes de télévision.

Par ailleurs, on considère dans ce qui suit, à titre d'exemple non limitatif, que les programmes radiophoniques sont diffusés par un réseau de diffusion de contenus non filaire (RD) de type DAB (pour « Digital Audio Broadcasting »), Mais, l'invention n'est pas limitée à ce type de réseau de diffusion de contenus non filaire. Elle concerne en effet tout type d'infrastructure terrestre et/ou satellitaire, non filaire, capable de transmettre par voie des d'ondes, en mode « broadcast » (diffusion) et/ou « multicast » (point-à-multipoînts), des contenus, éventuellement multimédia, et des informations relatives à ces contenus (par exemple le nom de la station radiophonique (ou chaîne de télévision) et le nom du contenu (ou programme)) à destination d'équipements radio (non filaires). Par conséquent, il pourra également s'agir d'un réseau de type DVB (pour « Digital Video Broadcasting »).

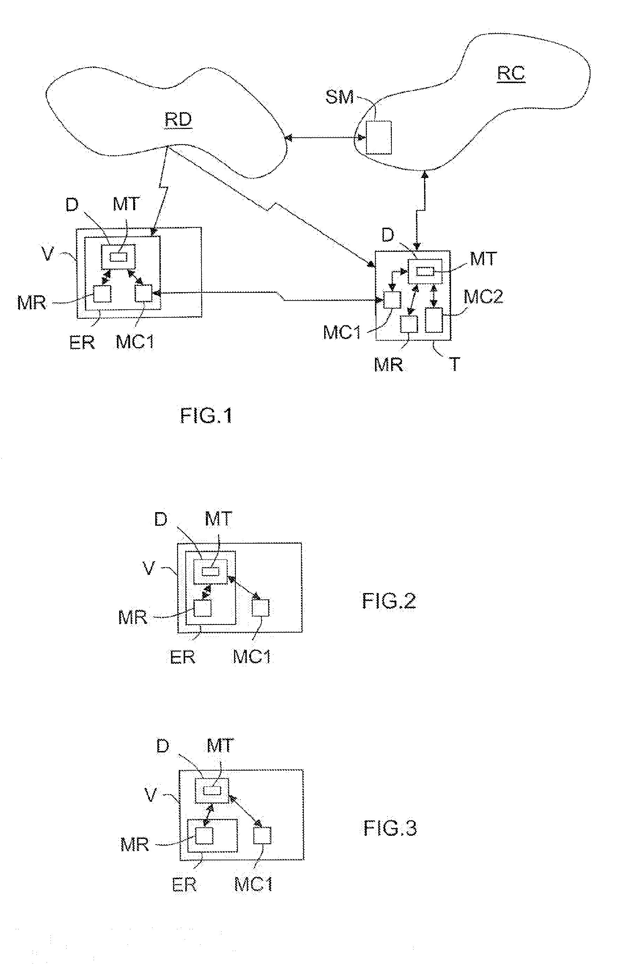

Comme cela est schématiquement illustré sur la figure 1, l'invention propose de coupler des équipements de communication non filaires T et/ou des équipements de réception de contenus non filaires ER à des dispositifs de contrôle D. On entend ici par « couplé à un dispositif de contrôle D » aussi bien le fait de comprendre un dispositif de contrôle D, comme c'est le cas dans les exemples illustrés sur les figures 1 et 2, que le fait d'être connecté à un dispositif de contrôle D, comme c'est le cas dans l'exemple illustré sur la figure 3.

Selon un mode de réalisation de l'invention comme illustré sur la figure 1, l'équipement de communication non filaire T comprend, d'une première part, des moyens de communication on filaires MC2, capables de se connecter à un réseau de communication non filaire RC. d'une deuxième part, des moyens de communication radio à courte portée MC1, capables d'échanger des messages avec des moyens de communication radio à courte portée MC1associés à un autre équipement (du même type (T) ou d'un autre type (ER)) situé dans son voisinage, et d'une troisième part, un dispositif de contrôle D selon l'invention. Comme on le verra plus loin, il est par ailleurs avantageux que l'équipement de communication non filaire T comprenne également des moyens de réception de contenus non filaire MR capables de recevoir des contenus et des informations relatives à ces contenus qui sont diffusés par un réseau de diffusion non maire RD (ici de type DAB). Le mécanisme de diffusion des informations de contenu peut être celui qui est appelé RDS (« Radio Data System » - système de transmission de données radio).

Comme illustré sur la figure 1, le dispositif de contrôle D est couplé aux moyens de communication non filaires MC2 et aux moyens de communication radio à courte portée MC1, ainsi qu'aux éventuels moyens de réception de contenus non filaires MR.

Un tel équipement de communication non filaire T est par exemple un téléphone mobile (ou cellulaire). Mais, il pourrait également s'agir d'un ordinateur portable ou d'un assistant personnel numérique (ou PDA, éventuellement de type « rocket PC »).

On notera que le réseau de communication non filaire RC, auquel peut se connecter l'équipement de communication non filaire T, est par exemple un réseau de téléphonie mobile (ou cellulaire) terrestre, tel qu'un réseau GSM, UMTS, GPRS/EDGE ou CDMA 2000, ou satellitaire encore hybride, ou bien un réseau local sans fil (standards WLAN ou WiMAX). Dans ce qui suit, on considère qu'il s'agit d'un réseau de téléphonie mobile terrestre.

On notera également que le réseau de communication non filaire RC doit être connecté directement ou indirectement au réseau de diffusion non filaire RD.

Selon un mode de réalisation de l'invention comme lustré sur la figure 1, l'équipement e réception e contenus non flaire ER comprend des moyens de réception de contenus non filaires MR capables de recevoir des contenus et des informations relatives à ces contenus qui sont diffusés par le réseau de diffusion non filaire RD (ici de type DAB), et est associé à, par exemple en étant couplé à, d'une part, des moyens de communication radio à courte portée MC1, capables d'échanger des messages avec des moyens de communication radio à courte portée MC1 associés à un autre équipement (du même type (ER) ou d'un autre type (T)) situé dans son voisinage, et d'autre part, un dispositif de contrôle D.

Comme illustré sur les figures 1 à 3, le dispositif de contrôle D est couplé aux moyens de communication radio à courte portée MC1 est aux moyens de réception de contenus non filaires MR.

Un tel équipement de réception de contenus non filaire ER est par exemple un autoradio embarqué dans un véhicule automobile V (comme illustré sur les figures 1 à 3). Mais, il peut s'agir de n'importe quel autre type de récepteur de contenus non filaire portable ou embarqué.

Dans l'exemple non limitatif illustré sur la figure 1, l'équipement de réception de contenus non filaire ER comprend non seulement des moyens de réception de contenus non filaires MR, mais également des moyens de communication radio à courte portée MC1 et un dispositif de contrôle D. Dans l'exemple non limitatif illustré sur la figure 2, l'équipement de réception de contenus non filaire ER comprend des moyens de réception de contenus non filaires Muret un dispositif de contrôle D, les moyens de communication radio à courte portée MC1 étant ceux du véhicule V. Dans l'exemple non limitatif lustré sur la figure 3, l'équipement de réception de contenus non filaire ER ne comprend que des moyens de réception de contenus non flaires MR, le dispositif de contrôle D et les moyens de communication radio a courte portée MC1 étant implantés ailleurs dans le véhiculé V.

Par ailleurs, quel que soit le type d'équipement ER ou T considéré, ses moyens de communication radio à courte portée MC1 sont capables d'échanger (transmettre et recevoir) des messages, par exemple selon un standard de communication. Par exemple, le standard de communication peut être Bluetooth ou Wi-Fi. Dans le cas du standard Wi-Fi, on peut par exemple envisager que les véhicules automobiles V soient pourvus d'une borne Wi-Fi servant de point d'accès.

Le dispositif de contrôle D comprend un module de traitement MT chargé, lorsque les moyens de communication radio à courte portée MC1, qui sont associés à son équipement T ou ER, ont récupéré auprès d'autres moyens de communication radio à courte portée MC1, qui sont associés à un autre équipement ER ou T voisin, des informations relatives au contenu diffusé que ce dernier équipement ER ou T reçoit, de configurer son équipement T ou ER en fonction des informations récupérées afin qu'il reçoive le contenu correspondant qui est en cours de diffusion.

En d'autres termes, le dispositif de contrôle D est chargé de contrôler le « transfert » de la réception d'un contenu en cours de diffusion entre deux équipements voisins.

Par ailleurs, la récupération des informations relatives à un contenu en cours de diffusion peut se faire :
- soit de façon automatique, c'est-à-dire dès que les moyens de communication radio à courte portée MC1 associés aux deux équipements voisins ER et T sont en mesure de communiquer entre eux,
- soit sur ordre d'un module de traitement MT consécutivement à la réception par son dispositif de contrôle D d'une instruction fournie par j'usager de l'équipement ER ou T auquel il est couplé et qui doit prendre le relais de l'autre équipement pour continuer à recevoir le contenu que ce dernier recevait jusqu'alors. Dans ce cas, l'équipement ER ou T peut par exemple comprendre une touche dédiée (éventuellement tactile) qui en cas d'actionnement déclenche une application qui avertit son dispositif de Contrôle D du fait que son usager veut poursuivre avec lui la réception du contenu qu'il recevait avec son autre équipement T ou ER.

Si l'équipement qui doit prendre le relais d'un autre équipement (en cours de réception d'un contenu associé à des informations de contenu) est un équipement de réception de contenus non filaire ER, alors, une fois que les informations relatives au contenu en cours de diffusion ont été récupérées par les moyens de communication radio à courte portée MC1 qui lui sont associés, le module de traitement MT de son dispositif de contrôle D peut par exemple ordonner à ses moyens de réception de contenus MR e recevoir ce contenu en cours de diffusion via le réseau de diffusion non filaire RD. Pour ce faire, le module de traitement MT communique les informations récupérées aux moyens de réception de contenus non filaires MR afin qu'ils se calent sur la station causant le contenu objet du transfert de réception.

Si l'équipement qui doit prendre le relais d'un autre équipement (en cours de réception d'un contenu associé à des informations de contenu) est un équipement de communication non filaire T, deux cas peuvent être envisagés selon que cet équipement T comprend ou non des moyens de réception de contenus MR.

Si l'équipement de communication non filaire T ne comprend pas de moyens de réception de contenus non filaires MR, alors un contenu défini par des informations de contenu (à récupérer) ne peut être obtenu que via le réseau de communication non filaire RC. Par conséquent, une fois que les informations relatives au contenu en cours dediffusion ont été récupérées par les moyens de communication radio à courte portée MC1 de cet équipement T, le module de traitement MT de son dispositif de contrôle D peut par exemple commencer par analyser les informations de contenu récupérées afin de déterminer au moins le nom du contenu (ici un programme radiophonique) et le nom du diffuseur de ce contenu (ici une station radio).

Puis, le module de traitement MT peut ordonner aux moyens de communication non flaires MC2 de son équipement T d'établir, via le réseau de communication non filaire RC, une connexion avec un équipement de réseau SM qui reçoit au moins le contenu recherché et qui est désigné par les informations de contenu récupérées. Cet équipement de réseau SM est par exemple un serveur de média (ou « média server »). Il peut faire partie du réseau de communication non filaire RC, comme illustré sur la figure 1, ou bien être couplé à ce dernier.

Une fois la connexion établie avec l'équipement de réseau SM, l'équipement T lui adresse une requête désignant le contenu recherché (dont une information d'identification, comme par exemple le nom, lui a été communiquée par son dispositif D). L'équipement de réseau SM transmet alors à l'équipement T requérant, via le réseau de communication non filaire RC, les données du contenu recherché (par exemple celles qui sont en cours de diffusion par le diffuseur), par exemple sous la forme de paquets IP, et ce contenu peut être joué par le lecteur de l'équipement T.

Si l'équipement de communication non filaire T comprend des moyens de réception de contenus non filaires MR. alors un contenu défini par des Informations de contenu (à récupérer) peut être obtenu soit via le réseau de communication non filaire RC, soit via le réseau de diffusion non filaire RD. Par conséquent, une fois que les informations relatives au contenu en cours de diffusion ont été récupérées par les moyens de communication radio à courte portée MC1 de cet équipement T, le module de traitement MT de son dispositif de contrôle D peut par exemple commencer par analyser les informations de contenu récupérées afin de déterminer au moins le nom du contenu (ici un programme radiophonique) et le nom du diffuseur de ce contenu (ici une station radio). Puis, il peut par exemple déterminer si les moyens de réception de contenus non filaires MR de son équipement T sont en mesure de recevoir le contenu correspondant aux informations récupérées. On comprendra qu'il est possible de privilégier la réception « en direct » du contenu avec les moyens de réception de contenus non filaires MR puisque cela est a priori gratuit (service gratuit - pas de communication à établir via le réseau de communication non filaire RC), mais que l'équipement T qui doit prendre le relais peut se trouver dans une zone d'ombre radio qui l'empêche de recevoir le contenu diffusé par le réseau de diffusion non filaire RD.

Pour effectuer cette détermination, le module de traitement MT peut par exemple communiquer les informations récupérées aux moyens de réception de contenus non filaires MR afin qu'ils se calent sur la station diffusant le contenu recherché. Si la qualité de la réception est bonne (par exemple du fait qu'elle est supérieure à un seuil choisi), alors le module de traitement MT peut par exemple configurer son équipement T afin qu'il utilise le contenu diffusé via le réseau de diffusion non filaire D que ses moyens de réception de contenus non filaires MR reçoivent depuis qu'il se sont calés sur la station qui le diffuse.

Si la qualité de la réception est bonne (par exemple du fait qu'elle est supérieure à un seuil choisi). alors le module de traitement MT peut par exemple requérir des moyens de communication non filaires MC2 de son équipement T rétablissement, via le réseau de communication non filaire RC, d'une connexion avec l'équipement de réseau SM qui reçoit au moins le contenu recherché et qui est désigné par les informations de contenu récupérées.

Une fois la connexion établie avec l'équipement de réseau SM, l'équipement T lui adresse une requête désignant le contenu recherché (dont une information d'identification, comme par exemple le nom, lui a été communiquée par son dispositif D). L'équipement de réseau SM transmet alors à l'équipement T requérant les données du contenu recherché (par exemple celles qui sont en cours de diffusion par le diffuseur), par exemple sous la forme de paquets IP, et ce contenu peut être joué par le lecteur de l'équipement T.

On notera que l'on peut transposer ce qui a été indiqué ci-avant au cas où le « transfert de contenu » se fait d'un équipement de communication non filaire T vers un équipement de réception de contenus non filaire ER. En effet, si l'équipement de communication non filaire T reçoit un contenu avec ses moyens de réception de contenus non filaires MR, alors il reçoit également les informations de contenu correspondantes, et donc les moyens de communication radio à courte portée MC1 de l'équipement de réception de contenus non filaire ER qui doit prendre le relais peuvent récupérer ces informations de contenu via les moyens de communication radio à courte portée MG1 de son équipement de communication non filaire T. De même, si l'équipement de communication non filaire T reçoit un contenu avec ses moyens de communication non filaires MC2, alors il reçoit également les informations de contenu correspondantes via le réseau de communication non filaire RC, et donc les moyens de communication radio à courte portée MG1 de l'équipement de réception de contenus non filaire ER qui doit prendre le relais peuvent récupérer ces informations de contenu via les moyens de communication radio à courte portée MC1 de son équipement de communication non filaire T.

On notera élément que le transfert de réception de contenu peut également se faire entre deux équipements d'un même type.

Le dispositif de contrôle D, et notamment son module de traitement MT, peut être réalisé sous la forme de circuits électroniques, de modules logiciels (ou informatiques), ou d'une combinaison de circuits électroniques et de modules logiciels.

L'invention ne se limite pas aux modes de réalisation de dispositif de contrôle, d'équipement de communication non filaire et d'équipement de réception de contenus non flaire décrits ci-avant, seulement à titre d'exemple, mais elle englobe toutes les variantes que pourra envisager l'homme de l'art dans le cadre des revendications ci-après.

## Revendications

1. Dispositif de contrôle (D), pour un équipement (T, ER) propre à recevoir des contenus et des informations relatives auxdits contenus diffusés par un réseau de diffusion non filaire (RD), ledit dispositif (D) comprenant des moyens de traitement (MT) agencés, en cas de récupération par des moyens de communication radio à courte portée (MC1) auxquels ledit équipement (T, ER) est associé, auprès d'autres moyens de communication radio à courte portée (MC1) auxquels est associé un autre équipement (ER, T) voisin, d'informations relatives au contenu diffusé que ce dernier reçoit, pour configurer ledit équipement (T, ER) en fonction desdites informations récupérées de sorte qu'il reçoive le contenu correspondant en cours de diffusion.

2. Dispositif selon la revendication 1, dans lequel lesdits moyens de traitement (MT) sont agencés pour ordonner aux moyens de communication radio à courte portée (MC1) associés audit équipement (T, ER) de récupérer auprès des moyens de communication radio à courte portée (MC1) associés à un autre équipement (ER, T) voisin des informations relatives au contenu diffusé qu'il reçoit.

3. Dispositif selon l'une des revendications 1 et 2, dans lequel lesdits contenus sont choisis dans un groupe comprenant au moins des programmes audio et des programmes vidéo.

4. Dispositif selon l'une des revendications 1 à 3, dans lequel lesdits moyens de traitement (MT) sont agencés, lorsque ledit équipement (T) est un équipement de communication disposant de moyens de communication radio à courte portée (MC1) de moyens de réception de contenus non filaires (MR), propres à recevoir des contenus et des informations relatives auxdits contenus diffusés par ledit réseau de diffusion non filaire (RD), et de moyens de communication non filaires (MC2), propres à se connecter à un réseau de communication non filaire (RG), pour déterminer si lesdits moyens de réception de contenus non filaires (MR) dudit équipement (T) sont en mesure de recevoir le contenu correspondant aux informations récupérées et i) dans l'affirmative, pour configurer ledit équipement (T) afin qu'il utilise le contenu diffusé via ledit réseau de diffusion non filaire (RD) et reçu par ses moyens de réception de contenus non filaires (MR), et ii) dans la négative, pour ordonner auxdits moyens de communication non filaires (MC2) dudit équipement (T) de se connecter audit réseau de communication non filaire (RC) afin de recevoir ledit contenu en cours de diffusion.

5. Dispositif selon l'une des revendications 1 à 3, dans lequel lesdits moyens de traitement (MT) sont agencés, lorsque ledit équipement (ER) dispose de moyens de réception de contenus non filaires (MR), propres à recevoir des contenus et des informations relatives auxdits contenus diffusés par ledit réseau de diffusion non filaire (RD), et est associé à des moyens de communication radio à courte portée (MC1), pour ordonner auxdits moyens de réception de contenus non filaires (MR) dudit équipement (ER) de recevoir ledit contenu en cours de diffusion via ledit réseau de diffusion non filaire (RD).

6. Equipement de communication non filaire (T) comprenant i) des moyens de communication non filaires (MC2), propres à se connecter à un réseau de communication non filaire (RC), ii) des moyens de communication radio à courte portée (MC1) propres à échanger des messages avec des moyens de communication radio à courte portée (MC1) associés à un autre équipement (ER, T) voisin, et iii) un dispositif de contrôle (D) selon l'une des revendications 1 à 4.

7. Equipement selon la revendication 6, comprenant en outre des moyens de réception de contenus non filaires (MR) propres à recevoir des contenus et des informations relatives auxdits contenus diffusés par un réseau de diffusion non filaire (RD).

8. Equipement selon l'une des revendications 6 et 7, dans lequel lesdits moyens de communication radio à courte portée (MG1) sont propres à échanger des messages selon un standard de communication choisi dans un groupe comprenant au moins Bluetooth et Wi-Fi.

9. Equipement de réception de contenus non filaire (ER) comprenant i) des moyens de réception de contenus non filaires (MR) propres à recevoir des contenus et des informations relatives auxdits contenus diffusés par un réseau de diffusion non filaire (RD), et ii) un dispositif de contrôle (D) selon l'une des revendications 1 à 3 et 5.

10. Equipement selon la revendication 9, comprenant en outre des moyens de communication radio à courte portée (MC1) propres à échanger des messages avec des moyens de communication radio à courte portée (MC1) associés à un autre équipement (ER, T) voisin.

11. Equipement selon la revendication 10, dans lequel lesdits moyens de communication radio à courte portée (MC1) sont propres à échanger des messages selon un standard de communication choisi dans un groupe comprenant au moins Bluetooth et Wi-Fi.
